# EUROPÄISCHE PATENTSCHRIFT

(11) **EP 1 490 724 B1**
(45) Veröffentlichungstag und Bekanntmachung des Hinweises auf die Patenterteilung: **22.11.2006**
(21) Anmeldenummer: 03711700.9
(22) Anmeldetag: 27.03.2003
(51) Int. Cl.: G02C 1/02

(54) **VORRICHTUNG ZUM BEFESTIGEN EINES KONSTRUKTIONSTEILS AN EINEM BRILLENGLAS**
DEVICE FOR FIXING A STRUCTURAL PART TO AN EYEGLASS LENS
DISPOSITIF DE FIXATION D'UN ELEMENT DE CONSTRUCTION SUR UN VERRE DE LUNETTES

(30) Priorität: 03.04.2002 AT 5162002
(43) Veröffentlichungstag der Anmeldung: 29.12.2004
(73) Patentinhaber: Silhouette International Schmied AG, 4021 Linz (AT)
(72) Erfinder: SPINDELBALKER, Rupert, A-4048 Puchenau (AT)
(74) Vertreter: Hübscher, Helmut
(86) Internationale Anmeldenummer: PCT/AT2003/000085
(87) Internationale Veröffentlichungsnummer: WO 2003/083553

(56) Entgegenhaltungen:
- EP-A- 0 561 763
- EP-A- 0 718 660
- WO-A-02/33474
- DE-A- 2 136 802
- US-B1- 6 250 755

## Beschreibung

### Technisches Gebiet

Die Erfindung bezieht sich auf eine Vorrichtung zum Befestigen eines Konstruktionsteils an einem Brillenglas mit einem den Glasrand übergreifenden Endsteg des Konstruktionsteils, mit zwei vom Endsteg abstehenden, parallelen Befestigungsstiften, die im Querschnitt widerhakenartige Ringwülste bilden, und mit in Bohrungen des Brillenglases einsetzbaren, einen den Bohrungsrand übergreifenden Kopf bildenden Kunststoffhülsen, in die die Befestigungsstifte von der den Köpfen gegenüberliegenden Bohrungsseite unter einer Verformung der Hülsenwand formschlüssig eingreifen.

### Stand der Technik

Zur Befestigung metallischer Konstruktionsteile, beispielsweise eines Nasensteges oder eines Brillenbügels, an einem Brillenglas ist es bekannt, an einem den Glasrand übergreifenden Endsteg zwei abstehende, parallele Befestigungsstifte anzulöten oder anzuschweißen, die mit im Querschnitt widerhakenartigen Ringwülsten versehen sind und in zwei randnahen Bohrungen des Brillenglases gehalten werden. Zu diesem Zweck werden in die Bohrungen Kunststoffhülsen eingesetzt, die an einem Ende einen den Bohrungsrand übergreifenden Kopf aufweisen. Die von der dem Kopf gegenüberliegenden Seite in die Kunststoffhülsen eingedrückten Befestigungstifte schneiden sich mit den widerhakenartigen Ringwülsten in die Kunststoffhülsen ein, so daß sich eine formschlüssige Verbindung ergibt, die die Befestigungsstifte axial sichert, weil die in den Kunststoffhülsen verkrallten Befestigungsstifte aufgrund der axialen Abstützung der Kunststoffhülsen über die Köpfe nicht aus den Bohrungen gezogen werden können. Die parallelen Befestigungsstifte bieten darüber hinaus eine verdrehsichere Abstützung, was vorteilhafte Befestigungsbedingungen schafft. Um diese Befestigungsart auch für Konstruktionsteile aus Kunststoff nützen zu können, könnte ein Drahtbügel, der die beiden Befestigungsstifte bildet, in den Endsteg eingebettet werden, was jedoch den Konstruktionsaufwand erheblich vergrößert und darüber hinaus eine Verbreiterung des den Glasrand übergreifenden Endsteges erfordert, um den Drahtbügel sicher im Kunststoff verankern zu können. Beispiele für solche Befestigungsarten werden in den Druckschriften EP 0 561 763 A und US 6 250 755 B1 beschrieben.

### Darstellung der Erfindung

Der Erfindung liegt somit die Aufgabe zugrunde, eine Vorrichtung zum Befestigen eine Konstruktionsteils aus Kunststoff an einem Brillenglas so auszugestalten, daß einfache Montageverhältnisse bei geringen Abmessungen des Endsteges sichergestellt werden können, ohne auf eine dauerhafte und belastungsfähige Verbindung verzichten zu müssen.

Ausgehend von einer Vorrichtung zum Befestigen eines Konstruktionsteils an einem Brillenglas der eingangs geschilderten Art löst die Erfindung die gestellte Aufgabe dadurch, daß der Endsteg mit den beiden Befestigungsstiften aus Kunststoff besteht, daß die beiden Kunststoffhülsen über einen gemeinsamen Anschlagkopf miteinander verbunden sind und daß der Elastizitätsmodul des Kunststoffes der Befestigungsstifte zumindest dem dreifachen Elastizitätsmodul des Kunststoffes der Kunststoffhülsen entspricht.

Das einstückige Formen des Endsteges mit den beiden Befestigungsstiften aus Kunststoff bietet zunächst einfache Konstruktionsverhältnisse, die keine Verbreiterung des Endsteges bedingen, so daß vergleichsweise kleine Abmessungen des Endsteges erreicht werden können, was im Hinblick auf das Übergreifen des Glasrandes und der allenfalls damit verbundenen Sichtbeeinträchtigung von erheblicher Bedeutung ist. Trotz der Ausbildung der Befestigungsstifte aus Kunststoff kann eine ausreichend zugefeste Verankerung der Befestigungsstifte in den Kunststoffhülsen über die im Querschnitt widerhakenartigen Ringwülste sichergestellt werden, wenn der Elastizitätsmodul des Kunststoffes der Befestigungsstifte zumindest dem dreifachen Elastizitätsmodul des Kunststoffes der Kunststoffhülsen entspricht, weil in diesem Fall die Ringwülste der Befestigungsstifte zwar keine ausreichende Härte zum Einschneiden in die Kunststoffhülsen aufweisen, aber hart genug sind, um im Bereich der Kunststoffhülsen ein Kaltfließen des Hülsenwerkstoffes mit der Wirkung zu erzielen, daß sich auf der Innenwand der Kunststoffhülsen Ringnutenausbilden, die wegen des damit verbundenen Formschlusses eine dauerhafte, zugefeste Verankerung der Befestigungsstifte in den Kunststoffhülsen ermöglichen. In diesem Zusammenhang ist zu bedenken, daß die mögliche Härte der Befestigungsstifte durch die mit der Härte zunehmenden Sprödigkeit begrenzt wird, die in einem zulässigen Bereich gehalten werden muß. Außerdem bedingen Befestigungsstifte aus Kunststoff im Vergleich mit Drahtstiften größere Stiftdurchmesser zur Aufnahme der auftretenden Belastungen. Größere Stiftdurchmesser ziehen bei gleichen Abmessungen des Endsteges einen geringen Freiraum zwischen den Befestigungsstiften nach sich, was das Abstützen der Kunststoffhülsen an den Bohrungsrändern über deren Köpfe wegen Platzmangels erschwert. Um diesem Umstand Rechnung zu tragen, sind die beiden Kunststoffhülsen miteinander über einen gemeinsamen Anschlagkopf verbunden. Dies bringt nicht nur besonders einfache Montageverhältnisse mit sich, weil die beiden Kunststoffhülsen gemeinsam gehandhabt werden, sondern verbessert auch die axiale Abstützung der Kunststoffhülsen an den Bohrungsrändern merklich, so daß durch die erfindungsgemäßen Maßnahmen Befestigungsverhältnisse für Kunststoffteile erreicht werden, die sich ohne weiteres mit den bekannten Bedingungen für die Verbindung des Brillenglases mit metallischen Konstruktionsteilen vergleichen lassen.

Wie bereits ausgeführt wurde, spielt das Kaltfließverhalten der Kunststoffhülsen für die zugfeste Verankerung der Befestigungsstifte in den Kunststoffhülsen eine wichtige Rolle. Besonders günstige Verhältnisse ergeben sich in diesem Zusammenhang, wenn die beiden Kunststoffhülsen aus einem kristallinen Kunststoff und die Befestigungsstifte aus einem amorphen Kunststoff bestehen, weil kristalline Kunststoffe im Vergleich zu amorphen Kunststoffen ein wesentlich besseres Kaltfließverhalten zeigen.

### Kurze Beschreibung der Zeichnung

In der Zeichnung ist der Erfingungsgegenstand beispielsweise dargestellt. Es zeigen:

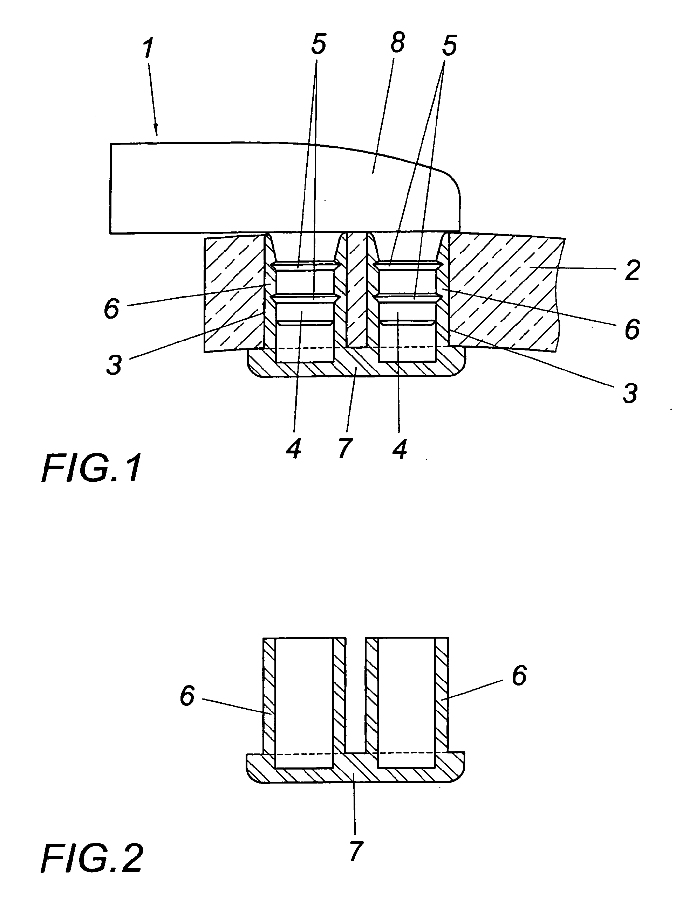

- Fig. 1: eine erfindungsgemäße Vorrichtung zum Befestigen eines Konstruktionsteils aus Kunststoff an einem Brillenglas in einem vereinfachten Schnitt und
- Fig. 2: die für diese Befestigungsvorrichtung benötigten Kunststoffhülsen ebenfalls im Schnitt.

### Weg zur Ausführung der Erfindung

Um einen Konstruktionsteil 1 aus Kunststoff, beispielsweise einen Nasensteg oder einen Bügel, an einem Brillenglas 2 zu befestigen, weist das Brillenglas 2 zwei benachbarte, parallele Bohrungen 3 auf, in die am Konstruktionsteil 1 angeformte Befestigungsstifte 4 eingreifen. Diese Befestigungsstifte 4 sind mit Ringwülsten 5 versehen, die einen widerhakenartigen Querschnitt aufweisen. Die Halterung der Befestigungsstifte 4 erfolgt nicht unmittelbar in den Bohrungen 3 des Brillenglases 2, sondern über in die Bohrungen 3 eingesetzte Kunststoffhülsen 6, die durch einen gemeinsamen Anschlagkopf 7 miteinander verbunden sind. Die Kunststoffhülsen 6 werden von der dem Konstruktionsteil 1 gegenüberliegenden Seite des Brillenglases 2 her in die Bohrungen 3 eingesetzt, bis der über die Hülsenwände radial vorstehende Anschlagkopf 7 am Bohrungsrand anschlägt und ein Widerlager bildet, das ein Ausziehen der Kunststoffhülsen 6 aus den Bohrungen 3 auf der dem Anschlagkopf 7 gegenüberliegenden Seite des Brillenglases 2 verhindert.

Die Befestigungsstifte 4, die an einem den Glasrand übergreifenden Endsteg 8 des Konstruktionsteils 1 vorgesehen sind, verkrallen sich mit ihren im Querschnitt widerhakenförmigen Ringwulsten 5 in den Hülsenwänden, so daß sich eine ausreichend zugfeste Verbindung zwischen den Befestigungsstiften 4 und den Kunststoffhülsen 6 ergibt, und zwar mit der Wirkung, daß der Konstruktionsteil 1 dauerhaft mit dem Brillenglas 2 verbunden ist, weil die Befestigungsstifte 4 nicht mehr ohne entsprechende Kraftanwendung aus den umfangsseitig von den Bohrungen 3 im Brillenglas 2 umschlossenen Kunststoffhülsen 6 herausgezogen werden können. Voraussetzung hiefür ist allerdings, daß der Elastizitätsmodul des Kunststoffes der Befestigungsstifte 4 zumindest dem dreifachen Elastizitätsmodul des Kunststoffes der Kunststoffhülsen 6 entspricht. Durch diese Maßnahme wird sichergestellt, daß sich die Ringwülste 5 in die Hülsenwände eindrücken und aufgrund der dadurch bedingten Druckbelastung ein Kaltfließen des Kunststoffes der Kunststoffhülsen mit der Wirkung bedingen, daß in den Hülsenwänden Ringnuten gebildet werden, in die die Ringwülste 5 der Befestigungsstifte 4 formschlüssig eingreifen, so daß über den dadurch gegebenen Formschluß zwischen Befestigungsstiften 4 und Kunststoffhülsen 6 eine ausreichende Haltekraft zur Befestigung des Konstruktionsteils 1 am Brillenglas 2 aufgebaut wird. In diesem Zusammenhang ist zu bedenken, daß die Härte der Konstruktionsteile zur Vergrößerung der Haltekraft erhöht werden könnte, doch steigt damit die Gefahr von Sprödbrüchen im Bereich der Befestigungsstifte 4. Um diesen zum Teil widersprüchlichen Anforderungen zu genügen, haben sich für am Brillenglas 2 zu befestigende Konstruktionsteile 1 amorphe Kunststoffe bewährt, die eine Streckspannung von 60 MPa und einen Elastizitätsmodul von 1500 MPa mit geringer Neigung zu einem Kaltfließen aufweisen. Die Kunststoffhülsen 6 wurden aus einem kristallinen Kunststoff mit einer Streckspannung von 25 MPa und einem Elastizitätsmodul von 450 MPa mit guten Kaltfließeigenschaften gefertigt. Sinkt das Verhältnis der Erlastizitätsmodule aufgrund härterer Kunststoffhülsen 6 - die Festigkeit der Befestigungsstifte 4 wird ja im wesentlichen durch die Anforderungen an den Konstruktionsteil und die tolerierbare Sprödigkeit der Befestigungsstifte 4 vorgeben - unter das Dreifache, so werden die widerhakenartigen Ringwülste 5 zunehmend verformt und es steigt der Druck in den Bohrungen 3 des Brillenglases 2, das somit einer anwachsenden Bruchgefahr ausgesetzt wird. Wird das Verhältnis der Elastizitätsmodule erhöht, werden die Kunststoffhülsen also weicher ausgebildet, so sinkt die Haltekraft der Befestigung.

## Patentansprüche

1. Vorrichtung zum Befestigen eines Konstruktionsteils (1) an einem Brillenglas (2) mit einem den Glasrand übergreifenden Endsteg (8) des Konstruktionsteils (1), mit zwei vom Endsteg (8) abstehenden, parallelen Befestigungsstiften (4), die im Querschnitt widerhakenartige Ringwülste (5) bilden, und mit in Bohrungen des Brillenglases (2) einsetzbaren, einen den Bohrungsrand übergreifenden Kopf bildenden Kunststoffhülsen (6), in die die Befestigungsstifte (4) von der den Köpfen gegenüberliegenden Bohrungsseite unter einer Verformung der Hülsenwand formschlüssig eingreifen, **dadurch gekennzeichnet, daß** der Endsteg (8) mit den beiden Befestigungsstiften (4) aus Kunststoff besteht, daß die beiden Kunststoffhülsen (6) über einen gemeinsamen Anschlagkopf (7) miteinander verbunden sind und daß der Elastizitätsmodul des Kunststoffes der Befestigungsstifte (4) zumindest dem dreifachen Elastizitätsmodul des Kunststoffes der Kunststoffhülsen (6) entspricht.

2. Vorrichtung nach Anspruch 1, **dadurch gekennzeichnet, daß** die beiden Kunststoffhülsen (6) aus einem kristallinen Kunststoff und die Befestigungsstifte (4) aus einem amorphen Kunststoff bestehen.

## Claims

1. Device for fixing a structural part (1) to an eyeglass lens (2), with an end web (8) of the structural part (1) engaging over the edge of the lens, with two parallel fixing pins (4) standing away from the end web (8) which form in cross-section barb-like annular collars (5), and with plastic sleeves (6) forming a head engaging over the edge of the bore which are adapted to be inserted into bores of the eyeglass lens (2), into which plastic sleeves (6) the fixing pins (4) engage in a shape-locking way from the bore side lying opposite the heads, with deformation of the sleeve wall, **characterised in that** the end web (8), with the two fixing pins (4), is of plastic, **in that** the two plastic sleeves (6) are connected to each other via a common stop head (7) and **in that** the modulus of elasticity of the plastic of the fixing pins (4) corresponds to at least three times the modulus of elasticity of the plastic of the plastic sleeves (6).

2. Device according to claim 1, **characterised in that** the two plastic sleeves (6) are of a crystalline plastic and the fixing pins (4) are of an amorphous plastic.

## Revendications

1. Dispositif de fixation d'un élément de construction (1) sur un verre de lunettes (2), avec une barrette d'extrémité (8), entourant le bord de verre, de l'élément de construction (1), avec deux tiges de fixation (4) parallèles, faisant saillie de la nervure d'extrémité (8), formant un bourrelet annulaire (5) ayant une section transversale du genre d'un contre-crochet, et avec des douilles (6) en matière synthétique, insérables dans des perçages du verre de lunettes (2) et formant une tête entourant le bord de perçage, douilles dans lesquelles les tiges de fixation (4) s'engagent avec une liaison à ajustement de forme, depuis le côté de perçage opposé à celui des têtes en étant accompagné d'une déformation de la paroi de douille, **caractérisé en ce que** la barrette d'extrémité (8) avec les deux tiges de fixation (4) est formée en matière synthétique, **en ce que** les deux douilles (6) en matière synthétique sont reliées ensemble par une tête de butée (7) commune, et **en ce que** le module d'élasticité de la matière synthétique formant les tiges de fixation (4) correspond au moins au triple du module d'élasticité de la matière synthétique formant les douilles (6) en matière synthétique.

2. Dispositif selon la revendication 1, **caractérisé en ce que** les deux douilles (6) en matière synthétique sont formées d'une matière synthétique cristalline, et les tiges de fixation (4) sont formées d'une matière synthétique amorphe.
